## Europäisches Patentamt
## European Patent Office
## Office européen des brevets

(11) Veröffentlichungsnummer: **0 073 254**
**B1**

(12) **EUROPÄISCHE PATENTSCHRIFT**

(45) Veröffentlichungstag der Patentschrift: **07.08.85**

(21) Anmeldenummer: **81106496.3**

(22) Anmeldetag: **21.08.81**

(51) Int. Cl.⁴: **C 09 D 3/14, B 41 M 5/24**

(54) Verfahren zum Herstellen von kompakten Lackschichten für Aufzeichnungsträger.

(43) Veröffentlichungstag der Anmeldung:
**09.03.83 Patentblatt 83/10**

(45) Bekanntmachung des Hinweises auf die
Patenterteilung:
**07.08.85 Patentblatt 85/32**

(84) Benannte Vertragsstaaten:
**DE FR GB IT**

(56) Entgegenhaltungen:
**DE-A-2 606 137**

(73) Patentinhaber: **IBM DEUTSCHLAND GMBH**
**Pascalstrasse 100**
**D-7000 Stuttgart 80 (DE)**
⑧④ **DE**

(73) Patentinhaber: **International Business Machines**
**Corporation**
**Old Orchard Road**
**Armonk, N.Y. 10504 (US)**
⑧④ **FR GB IT**

(72) Erfinder: **Bahr, Dietrich Jürgen, Dr.**
**Rheinstrasse 49**
**D-7033 Herrenberg (DE)**
Erfinder: **Briska, Marian**
**Nürtinger Strasse 51**
**D-7030 Böblingen (DE)**

(74) Vertreter: **Mönig, Anton, Dipl.-Ing.**
**Schönaicher Strasse 220**
**D-7030 Böblingen (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zum Herstellen von kompakten Lackschichten hohen Mattigkeitsgrades auf der Basis von Cellulose-Acetobutyrat für mit einer metallischen oder metallhaltigen Schicht überzogene Aufzeichnungsträger.

Für die Herstellung von Aufzeichnungsträgern für Elektroerosiondrucker werden Papiere mit Lacken beschichtet in denen meistens folgende Pigmente verwendet werden:

a) Ruß als Schwarzpigment mit einer sehr großen spezifischen Oberfläche und einem sehr kleinen Primärkorn von etwa 0,05 µm. Der Ruß muß daher stets als Sekundärkorn im Lack eingebaut werden. Die Sekundärkörner wiesen jedoch eine geringe mechanische Stabilität auf, d.h. sie lassen sich leicht zertrümmern und führen somit zu einem erhöhten Lackabrieb und erhöhten Schleifspuren beim Drucken. Durch den unpolaren Charakter dieses Pigments ist auch nur eine mäßige Verträglichkeit mit dem Cellulose-Estern des Lackes gegeben. Die innere Adhäsion des Polymeren zum Ruß wird zwar durch das Eindringen in die Sekundärköner verstärkt, hat aber eine außerordentlich starke Schrumpfung des Lackfilms beim Aushärten zur Folge.

b) Schwarze Eisenoxide haben eine zu hohe Härte und führen zu einen sehr hohen Elektrodenabrieb. Diese Pigmente bilden Kristalle mit Atomgitterstruktur, die sich durch eine hohe Härte und mäßige Polarität auszeichnen, wodurch sich eine gute Verträglichkeit mit dem Cellulose-Acetobutyrat des Lackes ergibt.

c) Den unter b) genannten Eigenschaften sind auch die Eigenschaften der weißen Pigmente wie z.B. Diatomeenerde, Quarz und Titandioxid gleichzustellen, wobei gerade Titandioxid eine ungewöhnlich starke weiße Deckkraft zeigt, so daß das Umfärben des Lackes auf schwarze Farbe Schwierigkeiten bereitet.

d) Gemäß einem früheren Vorschlag (EP—A—35106) wurde Calciumcarbonat als Mattierungsmittel und insbesondere als Mittel gegen das gefürchtet Backen an den Elektroden eingesetzt. Dieses Pigment verursacht keinen ungleichmäßigen Elektrodenabrieb, der als schwerwiegender Nachteil der Pigmente unter b) und c) erkannt worden ist.

$CaCO_3$ besitzt eine Ionengitter-Kristallstruktur und ist daher wesentlich polarer als Cellulose-Acetobutyrate. Durch die freien—OH-Gruppen im Cellulose-Acetobutyrate ist zwar eine gewisee Verträglichkeit mit $CaCO_3$ gegeben, doch ist die Oberflächenspannung des Lösungsmittels und des Cellulose-Acetobutyrats zum $CaCO_3$ schon so hoch, daß die Oberfläche des Lackes relativ scharfe Konturen der Calciumcarbonat-Körner erscheinen läßt. Dies ist dadurch bedingt, daß die Calciumcarbonat-Körner mit einer dünnen Schicht von Cellulose-Acetobutyrat umhüllt sind. Dadurch ist auch die innere Kohäsion des Lackfilms gering und die Ölzahl liegt viel zu niedrig. Man könnte hier eine Verbesserung erwarten, wenn man ein im Handel erhältliches mit einem Stearin-säure-Überzug versehenes $CaCO_3$ verwenden würde.

e) Schließlich gibt es noch hochpolymere Granulate mit einer Korngrößenverteilung im um-Bereich. Bis jetzt gibt es noch keine Erfahrungen mit derartigen Stoffen, doch muß gefordert werden, daß diese Pigmente eine gute Verträglichkeit mit den Lackpolymeren und eine vollkommene Unlöslichkeit mit dem verwendeten Lösungsmittel aufweisen, um eine Mischpolymer-Bildung zu verhindern.

Die der Erfindung zugrundliegende Aufgabe besteht also bei einem Verfahren der eingangs genannten Art darin, einen neuen Füllstoff bzw. ein neues Pigment anzugeben, das dem Cellulose-Acetobutyrat in der Lackgrundmasse beigemischt werden kann und as wesentlich bessere Eigenschaften des Lackes zu erzielen gestattet. Insbesondere soll durch den neuen Füllstoff erreicht werden, daß der Lack eine hohe thermische Stabilität aufweist, daß sich der füllstoff durch die Elektroden nicht zertrümmern läßt, daß sich der Füllstoff leicht mit Farbstoffen einfärben läßt und daß schließlich der Elektrodenabrieb durch eine hohe Beimengung dieses Füllstoffes beträchtlich verringert werden kann. Dies wird erfindungsgemäß dadurch erreicht, daß der Cellulose-Acetobutyrat enthaltenden Lackgrundmasse hochmolekulare Polysaccharide mit einem Anteil von solchen Polysacchariden, die Seitenketten sowie Anteile an Lignin enthalten mit einer Korngrößenverteilung dieser Füllstoffe von weniger als 10 µm und einem Molekulargewicht von etwa $10^6$ als Füllstoffe beigemischt werden.

Vorzugsweise geht man dabei so vor, daß das Molekulargewicht des Füllstoffes so hoch gewählt wird, daß er praktisch in Essigsäure-Estern oder Lösungsmitteln der Lackgrundmasse nicht löslich ist. Besonders vorteilhaft ist es, wenn man geradkettige Polysaccharide hoher Kristallinität verwendet, d.h. Polysaccharide mit vielen Bereichen von in gleicher Richtung verlaufenden Polysaccharidmolekülen in Form von Bündeln. Besonders vorteilhaft ist es jedoch, wenn man als Füllstoff feinst verteiltes Holzmehl verwendet, bei dem die Cellulose und die Polyose in sehr stabilen Mikrofibrillen mit Durchmessen von etwa 20 µm angeordnet sind, die wie oben untereinander durch das Lignen verkittet sind. Das Ausgangsmaterial für derartige Füllstoffe liefet bevorzugt das Holz von Laubbäumen mit hoher Rohdichte.

Dafür in Frage kommende Hölzer sind beispielsweise Pockholz, Guajakholz, Buche oder Eiche. Dieser neue Füllstoff bildet in Folge seiner außerordentlich starken inneren Adhäsion zum Cellulose-Acetobutyrat einen sehr kompakten Lackfilm mit einer bemerkenswert kratzfesten Oberfläche und einer Oberflächen-Topographie mit etwa linsenförmigen Hügeln, so daß eine für die duffuse Lichtstreuung wichtige sanfte Welligkeit erzielt wird. Dies hat sich bei Untersuchungen unter dem Elektronenmikroskop eindeutig ergeben. Durch die sehr hohe Verwandschaft in der chemischen Beschaffenheit der miteinander zu vermischenden Stoffe und durch die geringen Polaritätsunterschiede kann man einen sehr hohen Füllgrad erreichen, ohne daß dabei die Aufnahmefähigkeit des Polymeren überfordert wird. Neueste Experimente haben nämlich ergeben, daß alleine die Härte des Cellulose-Accetobutyrats einen relativ hohen Elektrodenabrieb in Elektroerosionsdruckern verursacht, und daß nach einerm Ausdiffundieren vom Weichmacher durch natürliche Alterung des Lackes der Abrieb auf etwa das Doppelte ansteigt. Durch den Einsatz des neuen Füllstoffes ist es zum ersten Mal möglich geworden, den Lack so extrem hoch zu füllen, daß der Elektrodenabried maßgeblick durch den Füllstoff und nicht durch den Lack selbst bestimmt wird. Da es sich bei dem neuen Füllstoff um ein zähes, aber nicht abrasives Material handelt, ist hier eine wesentliche Verbasserung zu erwarten.

Durch den neuen Füllstoff werden folgende wichtige Eigenschaften des Lackes erzielt. Je nach Struktur und Härte des Ausgangsmaterials kann man verschiedene Partikelformen und Härtegrade erzielen. An den ausgebrannten Stellen zeigt der neue Füllstoff eine starke Umfärbungswirkung. Der neue Füllstoff hat eine sehr hohe thermische Stabilität. Der neue Füllstoff läßt sich durch die Elektroden nicht zertrümmern, da das Primärkorn außerordentlich zäh ist. Außerdem läßt sich der neue Füllstoff mit Farbstoffen gut durchfärben. Ferner la8ßt sich mit den neun Füllstoff ein nahezu transparenter farbloser Film mit hoher Rauhigkeit auf einer schwarzen Unterlage herstellen, wodurch man hellen Abrieb erhält.

Das Verhältnis von Cellulose-Acetobutyrat zu dem neuen Füllstoff kann in weiten Grenzen verändert werden, und zwar je nach Verwendungszweck und gewünschten Eigenschaften und beträgt (ggf. unter Beimischung anderer Pigmente) 5:1 bis 1:2 bzw. 1:3. Hierbi muß noch erwähnt werden, daß der Cellulose-Acetobutyrat-Lack bei einem Mischungsverhältnis von 3:1 eine wesentlich geringere Schrumpfung aufweist.

Insgesamt wird durch die Beimischung dieses neuen Füllstoffes ein Lack erzielt, der neben einem hohen Mattigkeitsgrad auch eine hohe mechanische Festigkeit und eine hohe Kratzfestigkeit aufweist.

## Patentansprüche

1. Verfahren zum Herstellen vom kompakten Lackschichten hohen Mattigkeitsgrades auf der Basis von Cellulose-Acetobutyrat für mit einer metallischen oder metallhaltigen Schicht überzogene Aufzeichnungsträger, dadurch gekennzeichnet, daß der Lackgrundmasse hochmolekulare Polysaccharide mit einem Anteil von solchen Polysacchariden, die Sietenketten sowie Anteile an Lignin enthalten, mit einer Korngrößenverteilung <10 µm und einem Molekulargewicht von etwa $10^6$ als Füllstoffe beigemischt werden.

2. Verfahren nach Anspruch 1, dadurch gekennzeichnet, daß das Moleculargewicht des Füllstoffes so hoch gewählt wird, daß er praktisch in Essigsäure-Estern oder Lösungsmitteln der Lackgrundmasse nicht löslich ist.

3. Verfahren nach Anspruch 1 oder 2, dadurch gekennzeichnet, daß geradkettige Polysaccharide hoher Kristallinität d.h. mit vielen Bereichen von in gleicher Richtung verlaufender Polysaccharidmolekülen in Form von Bündeln verwendet werden.

4. Verfahren nach Anspruch 1, dadurch gekennzeichnet, daß als Ausgangsmaterial für den Füllstoff Holzpartikel verwendet werden, bei denen die Cellulose und die Polyose in sehr stabilen Mikrofibrillen mit Durchmessern von etwa 20 µm angeordnet sind, die wiederum untereindander mit dem Lignin verkitter sind.

5. Verfahren nach Anspruch 4, dadurch gekennzeichnet, daß als Ausgangsmaterial für den Füllstoff das Holz von Laubbäumen mit hoher Rohdichte verwendet wird.

## Revendications

1. Procédé pour réaliser des couches de laque compactes et très mattes, à partir d'acétobutyrates de cellulose destinées à des supports d'enregistrement recouverts d'une couche métallique ou à teneur métallique, caractérisé, en ce que des polysaccharides de poids moléculaire élevé dont une partie de ces polysaccharides contient des chaînes linéaires et des éléments de lignine, sont mélangés comme matière de remplissage à la substance de base de ladite laque, les polysaccharides ont une grosseur de grains inférieure à 10 µm et un poids moléculaire avoisinant $10^6$.

2. Procédé selon la revendication 1, caractérisé, en ce qu'il est choisi un poids moléculaire élevé de ladite matière de remplissage de sorte que cette dernière soit pratiquement insoluble dans des esters d'acide acétique ou dans des solvants utilisés pour ladite substance de base de la laque.

3. Procédé selon la revendication 1 ou 2, caractérisé, en ce qu'il utilise des polysaccharides, en chaîne linéaire présentant un taux de cristallinité élevé, en d'autres termes de nombreux domaines de tels polysaccharides sont composés par des molécules développés dans un même direction et ayant la forme d'un faisceau.

4. Procédé selon la revendication 1, caractérisé, en ce qu'on utilise comme substance de base de la matière de remplissage des particules végétales dans lesquelles sont agencés dans des microfibrilles d'un diamètre d'environ 20 µm des celluloses et des polyoses qui sont eux-mêmes assemblées réciproquement avec le lignine de manière à former une pâte homogène.

5. Procédé selon la revendication 4, caractérisé, en ce qu'on utilise comme substance de base de la matière de remplissage la matière végétale d'arbres à feuilles caduques d'une densité brute élevée.

# Claims

1. A process for producing compact, cellulose acetobutyrate based lacquer layers with a high degree of dullness for record carriers coated with a metallic or metalliferous layer, characterized in that high-molecular polysaccharides containing an amount of such polysaccharides that have side chains and contain lignin are admixed as fillers with a particle size distribution of <10 μm and a molecular weight of about $10^6$.

2. The process according to claim 1, characterized in that the molecular weight of the filler is chosen so high that it is practically insoluble in acetic esters or solvents for the basic lacquer compound.

3. The process according to claim 1 or 2, characterized in that straight chain polysaccharides of high crystallinity are used, i.e., polysaccharides having a plurality of regions with bundles of polysaccharide molecules extending in the same direction.

4. The process according to claim 1, characterized in that as a starting material for the filler, wooden particles are used, wherein the cellulose and the polyose are arranged in very stable microfibrils with diameters of about 20 μm which are interlinked by lignin.

5. The process according to claim 4, characterized in that as a starting material for the filler, the wood of deciduous trees with a high original density is used.